# EUROPÄISCHE PATENTANMELDUNG

(11) **EP 1 867 966 A1**
(43) Veröffentlichungstag der Anmeldung: **19.12.2007**
(21) Anmeldenummer: 06012226.4
(22) Anmeldetag: 14.06.2006
(51) Int. Cl.: G01G 15/00, G01G 23/10

(54) **Kontrollwaage und Verfahren zum Kontrollwiegen**

(71) Anmelder: SIEMENS AKTIENGESELLSCHAFT, 80333 München (DE)
(72) Erfinder: Kaszkin, Andreas, 76870 Kandel (DE); Pietrzak, Przemyslaw, 72-099 Police (PL); Stiehl, Wolfgang, 76744 Wörth (DE)

(57) **Zusammenfassung**

Beim Kontrollwiegen werden Wägegüter, wie z. B. fertig verpackte Stoffe, mittels einer Transporteinrichtung nacheinander einer Kontrollwaage zugeführt und nach erfolgter Wiegung weggeführt.

Um mit einfachen Mitteln eine möglichst schnelle und genaue Kontrollwiegung zu ermöglichen, werden die Ankunft eines Wägeguts (3) an der Kontrollwaage (1) und das Entfernen des Wägeguts (3) von der Kontrollwaage (1) erfasst; das von der Kontrollwaage (1) gelieferte Wägesignal (m) durchläuft ein Signalfilter (6), dessen Filtercharakteristik veränderbar ist und in Abhängigkeit von der erfassten Ankunft und dem erfassten Entfernen des Wägegutes (3) auf unterschiedliche vorgegebene Filtercharakteristiken angepasst wird.

## Beschreibung

Die Erfindung betrifft eine Kontrollwaage und ein Verfahren zum Kontrollwiegen.

Beim Kontrollwiegen (checkweighing) werden Wägegüter, wie z. B. fertig verpackte Stoffe, mittels einer Transporteinrichtung, z. B. einem Bandförderer, nacheinander einer Kontrollwaage (checkweigher) zugeführt und nach erfolgter Wiegung weggeführt. Die Kontrollwaage ist dazu in das Transportsystem eingebunden und kann ebenfalls Transportmittel aufweisen. Wenn sich kein Wägegut auf der Kontrollwaage befindet, wird deren Leergewicht erfasst. Das Gewicht des Wägeguts ergibt sich aus der Differenz zwischen dem von der Kontrollwaage bei aufliegendem Wägegut gemessenen Gewicht und dem Leergewicht.

Da die Kontrollwaage ein Feder-Masse-System bildet, weist das von ihr gelieferte Wägesignal Schwingungen auf, die aus der Dynamik des abwechselnden Belastens mit dem Wägegut und Entlastens von dem Wägegut resultieren. Zudem können äußere Störeinflüsse, z. B. Vibrationen aus dem Transportsystem, das Wägesignal überlagern, weswegen es üblicherweise vor der weiteren Auswertung einer Tiefpass- oder Mittelwertfilterung unterzogen wird. Bei den dazu heute verwendeten Signalfiltern wird die Filtercharakteristik üblicherweise fest eingestellt, so dass sie während des gesamten Betriebs der Kontrollwaage unverändert bleibt. Die Einstellung der Grenzfrequenz des Tiefpassfilters bzw. der Filterbreite des Mittelwertfilters stellt somit einen Kompromiss zwischen der Reaktionsgeschwindigkeit auf Signalveränderungen und der geforderten Messgenauigkeit dar. Es ist auch die Verwendung von adaptiven Signalfiltern bekannt, bei denen abhängig von dem Signalverlauf des gefilterten Signals die Filtercharakteristik verändert wird. Schließlich ist es bekannt, beim Belasten der Kontrollwaage mit dem Wägegut eine Gegenkraft zu erzeugen, wodurch die Schwingungen der Kontrollwaage verringert werden und dadurch schneller ein genaues Messergebnis erhalten wird.

Der Erfindung liegt die Aufhabe zugrunde, mit einfachen Mitteln eine schnelle und genaue Kontrollwiegung zu ermöglichen.

Gemäß der Erfindung wird die Aufgabe durch die in Anspruch 1 angegebene Vorrichtung bzw. das in Anspruch 11 angegebene Verfahren gelöst.

Vorteilhafte Weiterbildungen der erfindungsgemäßen Vorrichtung bzw. des erfindungsgemäßen Verfahrens sind den Unteransprüchen zu entnehmen.

Gegenstand der Erfindung ist somit
eine Kontrollwaage zum Wiegen von Wägegütern, die mittels einer Transporteinrichtung nacheinander der Kontrollwaage zugeführt und nach erfolgter Wiegung weggeführt werden,
- mit ersten Mitteln zur Erfassung der Ankunft eines Wägeguts an der Kontrollwaage,
- mit zweiten Mitteln zur Erfassung des Entfernens des Wägeguts von der Kontrollwaage,
- mit einem Signalfilter mit veränderbarer Filtercharakteristik zur Filterung des von der Kontrollwaage gelieferten Wägesignals, und
- mit einer von den ersten und zweiten Mitteln ansteuerbaren Filteranpasseinrichtung zum Anpassen der Filtercharakteristik auf unterschiedliche vorgegebene Filtercharakteristiken,
bzw.
ein Verfahren zum Kontrollwiegen von Wägegütern, die mittels einer Transporteinrichtung nacheinander einer Kontrollwaage zugeführt und nach erfolgter Wiegung weggeführt werden, wobei
- die Ankunft eines Wägeguts an der Kontrollwaage erfasst wird,
- das Entfernen des Wägeguts von der Kontrollwaage erfasst wird, und
- das von der Kontrollwaage gelieferte Wägesignal ein Signalfilter durchläuft, dessen Filtercharakteristik veränderbar ist und in Abhängigkeit von der erfassten Ankunft und dem erfassten Entfernen des Wägegutes auf unterschiedliche vorgegebene Filtercharakteristiken angepasst wird.

Der Erfindung liegt die Erkenntnis zugrunde, dass eine exakte Gewichts- bzw. Massebestimmung nur zu bestimmten Zeitpunkten des Wägeprozesses notwendig ist und dass diese Zeitpunkte nicht aus dem Signalverlauf des Wägesignals bestimmt werden müssen, sondern dass sie durch die Steuerung des Prozessablaufs vorgegeben und somit bekannt sind. Entsprechend wird die dynamische Anpassung der Signalfilterung in Abhängigkeit von dem Prozessablauf gesteuert. Die aus dem Prozess ermittelbaren Zeitpunkte sind der Zeitpunkt der Ankunft des Wägeguts an der Kontrollwaage und der Zeitpunkt der Entfernung des Wägeguts von der Kontrollwaage. Diese beiden Zeitpunkte lassen sich vorzugsweise durch Ermittlung der Transportposition der Wägegüter, beispielsweise mittels Lichtschranken, erfassen. Alternativ können die beiden Zeitpunkte aus dem von der Kontrollwaage gelieferten Wägesignal, beispielsweise durch Über- bzw. Unterschreiten eines Schwellenwertes, ermittelt werden.

Vorzugsweise wird das Wägesignal tiefpassgefiltert, wozu hier auch eine Mittelwertfilterung gerechnet wird. Dabei ist die Filtercharakteristik bezüglich der Grenzfrequenz veränderbar, was im Falle der Mittelwertfilterung der Filterbreite entspricht. Unter Filterbreite ist die Anzahl der zur Mittelwertbildung herangezogenen Stützwerte des Wägesignals zu verstehen. Darüber hinaus kann die Filtercharakteristik auch noch bezüglich des Filtertyps, z. B. Bessel- oder Butterworth-Filter und/oder der Filterordnung veränderbar sein.

Die exakte Gewichts- bzw. Massebestimmung erfolgt jeweils dann, wenn sich das Wägegut auf der Kontrollwaage befindet, und dann, wenn diese leer ist. Dabei weist das Wägesignal allerdings anfänglich jeweils erhebliche Schwingungen aufgrund des vorangegangenen Belastungs- bzw. Entlastungsvorgangs auf, die mit der Zeit abklingen. Um möglichst schnell den exakten Gewichts- bzw. Massewert zu erhalten, der dem Mittelwert des Wägesignals entspricht, wird in vorteilhafter Weise unmittelbar nach der Ankunft eines Wägeguts an der Kontrollwaage bzw. nach dem Entfernen des Wägegutes von der Kontrollwaage die Grenzfrequenz des als Tiefpassfilter ausgebildeten Signalfilters innerhalb einer vorgegebenen Zeit von einem vorgegebenen höheren Wert auf einen vorgegebenen niedrigeren Wert verändert. Im Falle eines Mittelwertfilters wird die Filterbreite von einem vorgegebenen niedrigeren Wert auf einen vorgegebenen höheren Wert verändert. Die Änderung folgt einer vorgegebenen Zeitfunktion, beispielsweise exp -t/τ oder exp -(t/τ)², wobei t die Zeit und τ eine vorgegebene, z. B. parametrierbare, Zeitkonstante bezeichnet. Dadurch wird das Ausgangssignal des Signalfilters sehr schnell auf den Mittelwert des Wägesignals gebracht, der exakt das zu bestimmende Gewicht bzw. die zu bestimmende Masse wiedergibt. Die nach dem Belasten bzw. Entlasten der Kontrollwaage für die exakte Gewichts- bzw. Massebestimmung erforderlichen Wartezeiten sind somit entsprechend kurz, so dass die Wägegüter schneller aufeinander folgen können und dadurch mehr Kontrollwiegungen pro Zeiteinheit ausgeführt werden können.

Zur weiteren Erläuterung der Erfindung wird im Folgenden auf die Figuren der Zeichnung Bezug genommen; im Einzelnen zeigen die:
- Figuren 1 bis 3: verschiedene Beispiele für die erfindungsgemäße Kontrollwaage, und
- Figur 4: ein Beispiel für die Filterung des von der Kontrollwaage erzeugten Wägesignals.

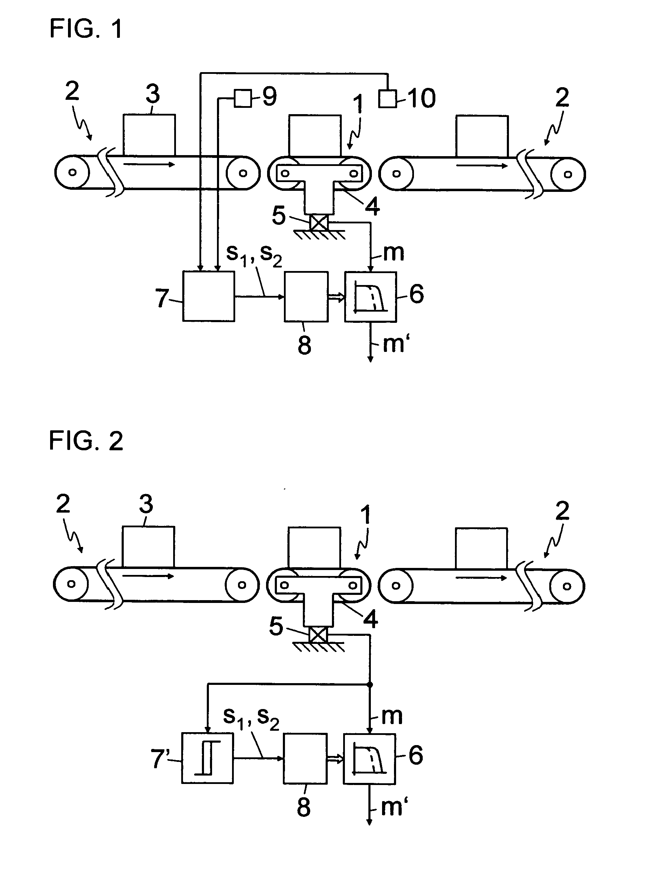

Figur 1 zeigt in sehr vereinfachter schematischer Darstellung eine Kontrollwaage 1, die in-line im Verlauf einer Transporteinrichtung 2, hier z. B. eines Bandförderers, für Wägegüter 3 angeordnet ist. Die Kontrollwaage 1 weist ebenfalls ein Förderband 4 auf, das auf einer Wägeeinrichtung mit einer oder mehreren Wägezellen 5 gelagert ist. Die Kontrollwaage 1 erzeugt ein Wägesignal m, das in einem Signalfilter 6 mit veränderbarer Filtercharakteristik für die Weiterverarbeitung aufbereitet wird. Das Wägesignal m kann z. B. durch Aufsummieren der von den einzelnen Wägezellen 5 gelieferten Signale gebildet und ggf. verstärkt und digitalisiert werden (hier nicht dargestellt). Eine von einer Steuereinrichtung 7 ansteuerbare Filteranpasseinrichtung 9 ermöglicht es, die Filtercharakteristik des Signalfilters 6 in Abhängigkeit von Steuersignalen s₁ bzw. s₂ auf unterschiedliche vorgegebene Filtercharakteristiken anzupassen. Zwei an der Steuereinrichtung 7 angeschlossene Lichtschranken 9 und 10 erfassen unterschiedliche Transportpositionen des Wägeguts 3. Das Steuersignal s₁ wird erzeugt, wenn das Wägegut 3 die Kontrollwaage 1 erreicht oder spätestens, wenn das Wägegut 3 auf vollständig die Kontrollwaage gelangt ist. Das Steuersignal s₂ wird erzeugt, wenn das Wägegut 3 die Kontrollwaage 1 verlässt oder spätestens, wenn das Wägegut 3 die Kontrollwaage 1 vollständig verlassen hat.

Das in Figur 2 gezeigte Ausführungsbeispiel unterscheidet sich von dem nach Figur 1 dadurch, dass die Steuersignale s₁ bzw. s₂ aus dem Wägesignal m der Kontrollwaage 1 abgeleitet werden. Dazu ist die Steuereinrichtung 7' als Schwellenwertdetektor ausgebildet, der das Steuersignal s₁ erzeugt, wenn das Wägesignal m einen Schwellenwert überschreitet, und das Steuersignal s₂ erzeugt, wenn das Wägesignal m denselben oder einen weiteren Schwellenwert unterschreitet.

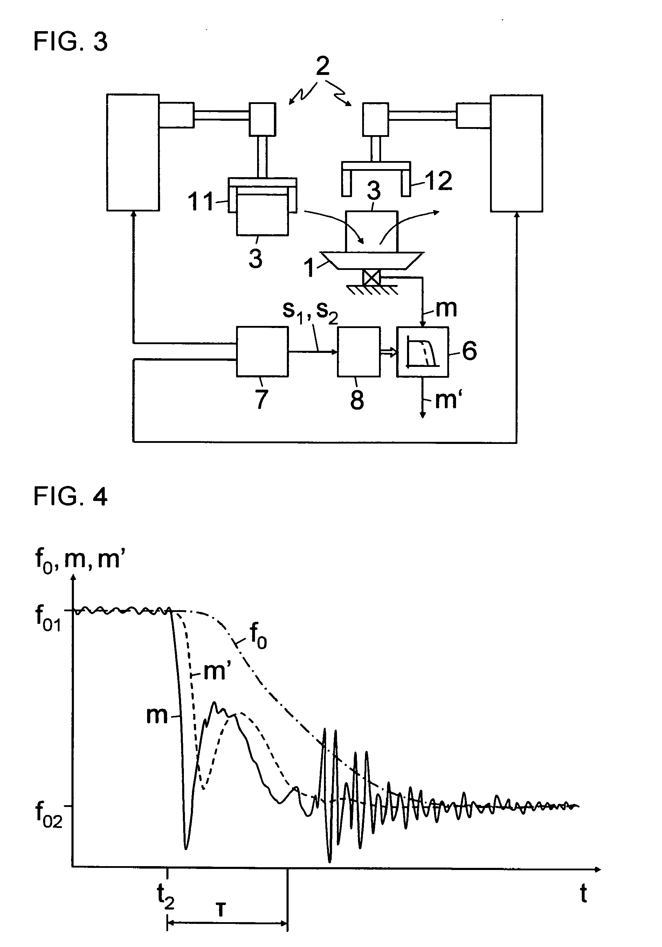

Bei dem in Figur 3 gezeigten Ausführungsbeispiel besteht die Transporteinrichtung 2 aus zwei von der Steuereinrichtung 7 angesteuerten Greifern 11 und 12 zum Be- und Entladen der hier ruhenden Kontrollwaage 1 mit den Wägegütern 3.

Das Gewicht des Wägeguts 3 ergibt sich aus der Differenz zwischen dem von der Kontrollwaage 1 bei aufliegendem Wägegut 3 gemessenen Gewicht und dem Leergewicht. Da in beiden Fällen die Masse des Feder-Masse-Systems und damit die Schwingungsfrequenzen unterschiedlich sind, werden mittels der Steuersignale s₁ bzw. s₂ unterschiedliche Filtercharakteristiken, hier unterschiedliche Grenzfrequenzen des als Tiefpassfilter ausgeführten Signalfilters 6 eingestellt.

Wie Figur 4 am Beispiel der Entlastung der Kontrollwaage 1 von dem Wägegut 3 zeigt, ist das Wägesignal m zunächst hauptsächlich durch die Dynamik der Kräfte beim Übergang des Wägegutes 3 von der Kontrollwaage 1 auf das Transportsystem 2 beeinflusst. Anschließend schwingt die leere Kontrollwaage 1 m mit ihrer Eigenfrequenz um den Wert des Leergewichts, wobei die anfangs hohe Schwingungsamplitude mit der Zeit abnimmt. Weitere Störsignale, wie von außen kommende Vibrationen, sind dem Wägesignal m überlagert.

Um möglichst schnell das exakte Leergewicht der Kontrollwaage 1 zu erhalten, die dem Mittelwert des Wägesignals m entspricht, wird zum Zeitpunkt t₂, wenn die Steuereinrichtung 7 bzw. 7' das Steuersignal s₂ erzeugt, die Grenzfrequenz f₀ des Signalfilters 6 innerhalb einer vorgegebenen Zeit von einem vorgegebenen höheren Wert f₀₁ auf einen vorgegebenen niedrigeren Wert f₀₂ verändert. Die Änderung der Grenzfrequenz f₀ erfolgt dabei mit einer vorgegebenen Zeitfunktion, hier z. B. δ (t) = f₀₂[1+((f₀₁-f₀₂) /f₀₂)exp-(t/τ)²]. Damit wird das Ausgangssignal m' des Signalfilters 6 sehr schnell auf den Mittelwert des Wägesignals m gebracht, der exakt dem zu bestimmenden Leergewicht der Kontrollwaage 1 entspricht. Die nach dem Entlaste der Kontrollwaage 1 für die exakte Gewichtsbestimmung erforderliche Wartezeit ist somit sehr kurz, so dass die Belastung mit dem nächsten Wägegut 3 entsprechend früher erfolgen kann.

Die Anpassung der Filtercharakteristik des Signalfilters 6 beim Belasten der Kontrollwaage 1 mit dem nächsten Wägegut 3 erfolgt in entsprechender Weise, wobei wegen der höheren Masse des Feder-Masse-Systems das Frequenzniveau niedriger ist.

Die Parameter für die unterschiedlichen Filtercharakteristiken des Signalfilters 6 sind in der Filteranpasseinrichtung 8 z. B. in Tabellenform abgespeichert und können neben den verschiedenen Werten für die Grenzfrequenz auch unterschiedliche Filterfunktionen, z. B. Bessel- oder Butterworth-Filter oder unterschiedliche Filterordnungen umfassen.

## Patentansprüche

1. Kontrollwaage (1) zum Wiegen von Wägegütern (3), die mittels einer Transporteinrichtung (2) nacheinander der Kontrollwaage (1) zugeführt und nach erfolgter Wiegung weggeführt werden,
- mit ersten Mitteln (9) zur Erfassung der Ankunft eines Wägeguts (3) an der Kontrollwaage (1),
- mit zweiten Mitteln (10) zur Erfassung des Entfernens des Wägeguts (3) von der Kontrollwaage (1),
- mit einem Signalfilter (6) mit veränderbarer Filtercharakteristik zur Filterung des von der Kontrollwaage (1) gelieferten Wägesignals (m), und
- mit einer von den ersten und zweiten Mitteln (9, 10) ansteuerbaren Filteranpasseinrichtung (8) zum Anpassen der Filtercharakteristik auf unterschiedliche vorgegebene Filtercharakteristiken.

2. Kontrollwaage nach Anspruch 1, **dadurch gekennzeichnet, dass** die ersten und/oder zweiten Mittel (9, 10) dazu ausgebildet sind, die Transportposition der Wägegüter (3) zu erfassen.

3. Kontrollwaage nach Anspruch 1 oder 2, **dadurch gekennzeichnet, dass** die ersten und/oder zweiten Mittel dazu ausgebildet sind, die Ankunft bzw. das Entfernen des Wägeguts (3) aus dem von der Kontrollwaage (1) gelieferten Wägesignal (m) zu ermitteln.

4. Kontrollwaage nach einem der vorangehenden Ansprüche, **dadurch gekennzeichnet, dass** das Signalfilter (6) ein Tiefpassfilter ist, dessen Filtercharakteristik bezüglich der Grenzfrequenz (f₀) veränderbar ist.

5. Kontrollwaage nach einem der Ansprüche 1 bis 3, **dadurch gekennzeichnet, dass** das Signalfilter (6) ein Mittelwertfilter ist, dessen Filtercharakteristik bezüglich der Filterbreite veränderbar ist.

6. Kontrollwaage nach einem der vorangehenden Ansprüche, **dadurch gekennzeichnet, dass** die Filtercharakteristik bezüglich des Filtertyps und/oder der Filterordnung veränderbar ist.

7. Kontrollwaage nach Anspruch 1, **dadurch gekennzeichnet, dass** die Filteranpasseinrichtung (8) dazu ausgebildet ist, unmittelbar nach der Ankunft eines Wägeguts (3) an der Kontrollwaage (1) die Grenzfrequenz (f₀) des als Tiefpassfilter ausgebildeten Signalfilters (6) innerhalb einer vorgegebenen Zeit (τ) von einem vorgegebenen höheren Wert (f₀₁) auf einen vorgegebenen niedrigeren Wert (f₀₂) zu ändern.

8. Kontrollwaage nach Anspruch 1 oder 7, **dadurch gekennzeichnet, dass** die Filteranpasseinrichtung (8) dazu ausgebildet ist, unmittelbar nach dem Entfernen des Wägeguts (3) von der Kontrollwaage (1) die Grenzfrequenz des als Tiefpassfilter ausgebildeten Signalfilters (6) innerhalb einer vorgegebenen Zeit (τ) von einem vorgegebenen höheren Wert (f₀₁) auf einen vorgegebenen niedrigeren Wert (f₀₂) zu ändern.

9. Kontrollwaage nach Anspruch 1, **dadurch gekennzeichnet, dass** die Filteranpasseinrichtung (8) dazu ausgebildet ist, unmittelbar nach der Ankunft eines Wägeguts (3) an der Kontrollwaage (1) die Filterbreite des als Mittelwertfilter ausgebildeten Signalfilters (9) innerhalb einer vorgegebenen Zeit von einem vorgegebenen niedrigeren Wert auf einen vorgegebenen höheren Wert zu ändern.

10. Kontrollwaage nach Anspruch 1 oder 9, **dadurch gekennzeichnet, dass** die Filteranpasseinrichtung (8) dazu ausgebildet ist, unmittelbar nach dem Entfernen des Wägeguts (3) von der Kontrollwaage (1) die Filterbreite des als Mittelwertfilter ausgebildeten Signalfilters (6) innerhalb einer vorgegebenen Zeit von einem vorgegebenen niedrigeren Wert auf einen vorgegebenen höheren Wert zu ändern.

11. Verfahren zum Kontrollwiegen von Wägegütern (3), die mittels einer Transporteinrichtung (2) nacheinander einer Kontrollwaage (1) zugeführt und nach erfolgter Wiegung weggeführt werden, wobei
- die Ankunft eines Wägeguts (3) an der Kontrollwaage (1) erfasst wird,
- das Entfernen des Wägeguts (3) von der Kontrollwaage (1) erfasst wird, und
- das von der Kontrollwaage (1) gelieferte Wägesignal (m) ein Signalfilter (6) durchläuft, dessen Filtercharakteristik veränderbar ist und in Abhängigkeit von der erfassten Ankunft und dem erfassten Entfernen des Wägegutes (3) auf unterschiedliche vorgegebene Filtercharakteristiken angepasst wird.

12. Verfahren nach Anspruch 11, **dadurch gekennzeichnet, dass** die Ankunft bzw. das Entfernen des Wägegutes (3) aus der jeweiligen Transportposition der Wägegüter (3) erfasst wird.

13. Verfahren nach Anspruch 11 oder 12, **dadurch gekennzeichnet, dass** die Ankunft bzw. das Entfernen des Wägeguts (3) aus dem von der Kontrollwaage (1) gelieferten Wägesignal (m) ermittelt wird.

14. Verfahren nach einem der Anspruch 11 bis 13, **dadurch gekennzeichnet, dass** das Wägesignal (m) in dem Signalfilter (6) tiefpassgefiltert wird, dessen Filtercharakteristik bezüglich der Grenzfrequenz (f₀) verändert wird.

15. Verfahren nach einem der Anspruch 11 bis 13, **dadurch gekennzeichnet, dass** das Wägesignal (m) in dem als Mittelwertfilter ausgebildeten Signalfilter (6) gemittelt wird, dessen Filtercharakteristik bezüglich der Filterbreite verändert wird.

16. Verfahren nach einem der Ansprüche 11 bis 15, **dadurch gekennzeichnet, dass** die Filtercharakteristik ferner bezüglich des Filtertyps und/oder der Filterordnung veränderbar ist.

17. Verfahren nach Anspruch 11, **dadurch gekennzeichnet, dass** unmittelbar nach der Ankunft eines Wägeguts (3) an der Kontrollwaage (1) die Grenzfrequenz (f₀) des als Tiefpassfilter ausgebildeten Signalfilters (6) innerhalb einer vorgegebenen Zeit (τ) von einem vorgegebenen höheren Wert (f₀₁) auf einen vorgegebenen niedrigeren Wert (f₀₂) verändert wird.

18. Verfahren nach Anspruch 11 oder 17, **dadurch gekennzeichnet, dass** unmittelbar nach dem Entfernen des Wägeguts (3) von der Kontrollwaage (1) die Grenzfrequenz des als Tiefpassfilter ausgebildeten Signalfilters (6) innerhalb einer vorgegebenen Zeit (τ) von einem vorgegebenen höheren Wert (f₀₁) auf einen vorgegebenen niedrigeren Wert (f₀₂) verändert wird.

19. Verfahren nach Anspruch 11, **dadurch gekennzeichnet, dass** unmittelbar nach der Ankunft eines Wägeguts (3) an der Kontrollwaage (1) die Filterbreite des als Mittelwertfilter ausgebildeten Signalfilters (6) innerhalb einer vorgegebenen Zeit von einem vorgegebenen niedrigeren Wert auf einen vorgegebenen höheren Wert verändert wird.

20. Verfahren nach Anspruch 11 oder 19, **dadurch gekennzeichnet, dass** unmittelbar nach dem Entfernen des Wägeguts (3) von der Kontrollwaage (1) die Filterbreite des als Mittelwertfilter ausgebildeten Signalfilters (6) innerhalb einer vorgegebenen Zeit von einem vorgegebenen niedrigeren Wert auf einen vorgegebenen höheren Wert verändert wird.
